# EUROPÄISCHE PATENTSCHRIFT

(11) **EP 1 300 290 B1**
(45) Veröffentlichungstag und Bekanntmachung des Hinweises auf die Patenterteilung: **14.06.2006**
(21) Anmeldenummer: 02020346.9
(22) Anmeldetag: 12.09.2002
(51) Int. Cl.: B60R 5/00, F16F 3/10, F16F 7/00, E05F 7/04, E05F 5/02

(54) **Antiklapperanordnung**
Anti rattle assembly
Disposition anti vibration

(30) Priorität: 08.10.2001 DE 10149519
(43) Veröffentlichungstag der Anmeldung: 09.04.2003
(73) Patentinhaber: ITW Automotive Products GmbH & Co. KG, 58636 Iserlohn (DE)
(72) Erfinder: Isenberg, Rainer, 58642 Iserlohn (DE); Lafed, Stefan, 58706 Menden (DE)
(74) Vertreter: Hauck, Graalfs, Wehnert, Döring, Siemons

(56) Entgegenhaltungen:
- EP-A- 0 604 215
- DE-A- 19 953 448
- US-A- 6 039 388

## Beschreibung

Die Erfindung bezieht sich auf eine Pufferanordnung, insbesondere für bewegliche Teile in Automobilen nach dem Patentanspruch 1.

Puffer werden zum Beispiel benötigt für Klappen und Deckel in Automobilen, z.B. für den Handschuhfachdeckel. Der Deckel wird in der Schließstellung mit Hilfe eines geeigneten Mechanismus verriegelt und liegt dabei gegen ein oder mehrere Pufferelemente an. Das Pufferelement besteht üblicherweise aus einem Anschlagteil aus elastomerem Kunststoffmaterial, das mit Hilfe einer Schraube an einem Untergrund befestigt ist. Das Pufferelement hat dabei die Aufgabe, den Schlag beim Schließen der Klappe zu dämpfen und gleichzeitig eine satte Anlage des Deckels zu gewährleisten, damit er bei Stößen und Vibrationen nicht klappert und Geräusche verursacht.

Beim Einbau derartiger Pufferelemente und der Klappen oder Deckel fallen zum Teil erhebliche Toleranzen an, und es kommt nicht immer zu der gewünschten satten Anlage an dem Pufferelement. Als Folge davon sind störende Geräusche bei Schwingungen des Fahrzeugs zu gewärtigen.

Aus DE 199 53 448 Al ist eine Pufferanordnung der eingangs genannten Art bekannt geworden. Eine Schraube mit einem Kopf und einem gewindefreien Abschnitt wird mit dem Kopf in einem Pufferelement aufgenommen. Der Kopf und der gewindefreie Schaftabschnitt der Schraube ermöglichen eine geführte axiale Verschiebung relativ zum Pufferelement. Zwischen Pufferelement und einem Widerlager am Schaft ist eine Feder angeordnet, durch welche der Kopf der Schraube gegen eine innere Schulter in einer Ausnehmung des Pufferelements vorgespannt ist. Bei der bekannten Pufferanordnung wird das Widerlager von einer Scheibe gebildet, die an den Schaft der Schraube durch Rollverformung angeformt wird. Die Anbringung der Scheibe erfolgt, nachdem das Pufferelement und die Schraube zusammengesetzt worden sind.

Der Erfindung liegt die Aufgabe zugrunde, eine Pufferanordnung, insbesondere für bewegliche Teile in Automobilen, zu schaffen, die vor der Anbringung vollständig vormontiert werden kann.

Diese Aufgabe wird durch die Merkmale des Patentanspruchs 1 gelöst.

Der Anschlag oder das Widerlager für die Feder am Schraubenschaft hat normalerweise einen so großen Radius, dass es nicht möglich ist, die Schraube mit dem Schaft voran in das Pufferelement einzusetzen. Bei der Erfindung kann die Schraube mit dem Kopf in die Ausnehmung eingeführt werden, bis der Kopf die Schulter in der Ausnehmung des Pufferelements hintergreift.

Der Schraubenkopf nach der Erfindung hat einen konischen Einführabschnitt, und die Ausnehmung ist unterhalb der Schulter ebenfalls konisch geformt, sodass das Einführen des Schraubenkopfes erleichtert wird.

Bei der erfindungsgemäßen Pufferanordnung ist eine Schraube mit einem Kopf und einem Schaft vorgesehen, wobei der Schaft einen Gewindeabschnitt und einen gewindefreien Abschnitt nahe dem Kopf aufweist. Der Gewindeabschnitt weist vorzugsweise ein für Kunststoffe geeignetes Gewinde auf.

Nach einer Ausgestaltung der Erfindung weist das Pufferelement im axialen Abstand zur Schulter einen zweiten Führungsabschnitt auf, der mit einem zylindrischen Abschnitt des gewindefreien Schaftabschnitts zusammenwirkt. Auf diese Weise wird wirksam ein Kippen des Pufferelements relativ zum Schraubenkopf verhindert.

Um die Bauhöhe des eigentlichen Puffers zu minimieren, sieht eine andere Ausgestaltung der Erfindung vor, dass das Pufferelement konzentrisch zur ersten Ausnehmung eine zweite achsparallele Ausnehmung aufweist, in welche die Feder eingreift.

Wenn das Material des Pufferelements nicht ausreichend nachgiebig ist, ist es vorteilhaft, wenn nach einer Ausgestaltung der Erfindung das Pufferelement durch mindestens einen achsparallelen Schlitz geteilt ist, der sich vom schaftseitigen Ende des Pufferelements bis oberhalb der Schulter erstreckt. Dadurch kann das Pufferelement im Bereich des Schlitzes nachgeben, wenn der Schraubenkopf eingefiihrt wird.

Es ist zwar denkbar, das Widerlager einteilig am Schraubenschaft zu formen. Es ist jedoch vorteilhafter, wenn nach einer Ausgestaltung der Erfindung das Widerlager von einer Scheibe gebildet ist, die mit dem Gewindeabschnitt angerollt wird, und zwar zwischen einem Bund des gewindefreien Schaftabschnitts und dem Gewindeabschnitt. Bei der Herstellung wird die Scheibe zunächst auf den Schaftrohling aufgesteckt und anschließend bei der Formung des Gewindes angerollt.

Ein Ausführungsbeispiel der Erfindung wird nachfolgend anhand von Zeichnungen näher erläutert.

Fig. 1 zeigt einen Schraubenrohling mit einer Scheibe vor der Montage.

Fig. 2 zeigt eine Schraube mit angeformtem Gewindeschaftabschnitt und angerollter Scheibe.

Fig. 3 zeigt die Schraubenanordnung nach Fig. 2 mit einem Pufferlement vor der Montage.

Fig. 4 zeigt die montierte Anordnung nach Fig. 3 in vergrößerter Darstellung.

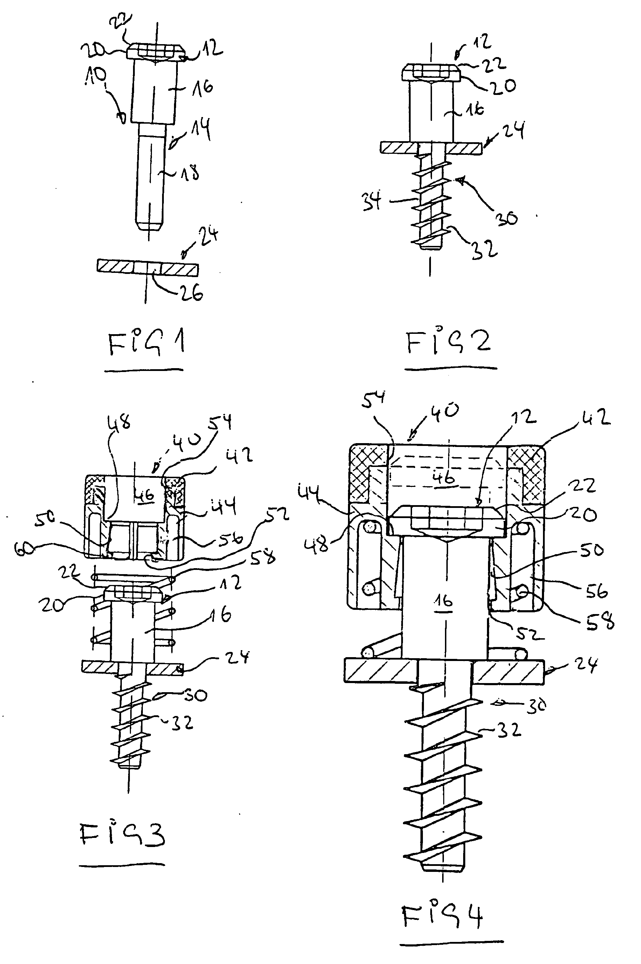

In Fig. 1 ist ein Schraubenrohling 10 dargestellt mit einem Kopf 12 und einem Schaft 14, der aus einem oberen zylindrischen Abschnitt 16 und einem unteren zylindrischen Abschnitt 18 besteht, wobei der letztere Abschnitt einen kleineren Durchmesser als der zylindrische Abschnitt 16 hat. Der Kopf 12 weist einen zylindrischen Abschnitt 20 auf und einen konischen Einführabschnitt 22. Unterhalb des Schaftes 14 ist eine Scheibe 24 im Schnitt dargestellt, die eine Kreiskontur aufweist und eine mittige Bohrung 26. Der Durchmesser der Bohrung 26 ist ein klein wenig größer als der Durchmesser des Schaftabschnitts 18.

In Fig. 2 ist die fertige Schraube 30 dargestellt. Man erkennt ein Gewinde 32 im Schaftabschnitt 34, wobei das Gewinde insbesondere für Kunststoffmaterial geeignet ist. Zwischen dem zylindrischen Abschnitt 16 und dem Gewinde 32 ist die Scheibe 24 angeordnet. Sie wird beim Formen des Gewindes 32 durch Walzen oder Rollen ebenfalls an den Schaftabschnitt 34 angerollt. Dadurch ist die Scheibe 24 axial am Schaft der Schraube 30 gehalten und lässt sich nur minimal bewegen.

In den Figuren 3 und 4 ist ein Pufferelement 40 dargestellt, das aus einem ersten Abschnitt 42 aus relativ weichem Material und einem zweiten Abschnitt 44 aus härterem Material besteht, die z.B. durch ein Zweikomponenten-Spritzverfahren miteinander verbunden sind. Die Abschnitte 42, 44 bilden einen mittigen Durchgang 46, der annähernd in der Mitte mit einer radialen Schulter 48 versehen ist. Unterhalb der Schulter 48 ist ein konischer Abschnitt 50 vorgesehen, der sich nach oben hin verjüngt. Am unteren Ende des konischen Abschnitts 50 des Durchgangs 46 verengt sich der Durchgang 46 und bildet dadurch eine axiale Führungsfläche 52. Eine zylindrische Fläche 54 oberhalb der Schulter 48 ist ebenfalls als Führungsfläche vorgesehen. Sie wirkt mit dem zylindrischen Abschnitt 20 des Schraubenkopfes 12 zusammen. Die Führungsfläche 52 wirkt mit dem zylindrischen Abschnitt 16 des Schraubenschaftes zusammen. Dadurch ist das Pufferelement 40 axial auf der Schraube 30 geführt und gegen ein Kippen gesichert. Wie zu erkennen, erstreckt sich der Pufferabschnitt 44 im Bereich des Durchgangs 46 relativ weit nach oben, sodass die Führungsfläche 54 weitgehend vom harten Material gebildet ist. Um eine ausreichende Sicherung des weicheren Materials 42 am harten Abschnitt 44 zu erhalten, erstreckt sich der Abschnitt 42 an der Außenseite des hülsenartigen Pufferelements 40 weiter nach unten.

Konzentrisch zum Durchgang 46 weist das Pufferelement 40 eine ringförmige Ausnehmung 56 auf, die eine Schraubenfeder 58 aufnimmt. Das andere Ende der Schraubenfeder stützt sich auf der Scheibe 24 ab.

Der Vormontagezustand ist in Fig. 3 dargestellt. Man erkennt, dass im Bereich des konischen Abschnitts 50 ein achsparalleler Schlitz 60 vorgesehen ist. Dadurch kann der Kopf 12 mit einem annehmbaren Kraftaufwand in das Pufferelement 40 eingeführt werden in eine Position, wie sie in Fig. 4 dargestellt ist. Die Feder spannt dabei den Kopf 12 gegen die Schulter 48 vor. Bei einer Belastung durch eine Klappe, einen Deckel oder dergleichen bewegt sich das Pufferelement 40 in Richtung Scheibe 24 und kommt mit dieser zur Anlage. Unter Umständen bleibt jedoch ein Spalt zwischen Pufferelement 40 und Scheibe 24 bestehen. Gleichwohl ist eine ausreichende Dämpfung für den nicht gezeigten Deckel oder die nicht gezeigte Klappe gewährleistet.

## Patentansprüche

1. Pufferanordnung, insbesondere für bewegliche Teile in Automobilen, mit
- einer Schraube (30), die einen Schaft (14) und einen Kopf (12) aufweist, wobei der Schaft einen Gewindeabschnitt (32) und einen gewindefreien Abschnitt (16) zwischen dem Gewindeabschnitt (32) und dem Kopf (12) aufweist
- einem Pufferelement (40), das eine Ausnehmung (46) aufweist zur Aufnahme des Kopfes (12), wobei die Unterseite des Kopfes (12) einer ringförmigen Schulter (48) in der Ausnehmung (46) zugekehrt ist
- einer Schraubenfeder (58) zwischen einem Widerlager (24) am Schaft und dem Pufferelement (40), die das Pufferelement (40) gegen den Kopf (12) vorspannt, wobei
- der Kopf (12) einen ringzylindrischen Umfangsabschnitt (20) aufweist, der mit einem zylindrischen Führungsabschnitt (54) der Ausnehmung (46) zusammenwirkt und
- das Pufferelement (40) aus zwei Abschnitten (42, 44) unterschiedlichen Materials besteht, von dem der eine Abschnitt aus weicherem Material besteht und eine Anschlagfläche bildet und der andere Abschnitt (44) aus härterem Material besteht und die Führungsfläche (54) bildet,
**dadurch gekennzeichnet, dass** zur Einführung der Schraube (30) in das Pufferelement (40) mit dem Kopf (12) voran der Teil (50) der Ausnehmung (46) des Pufferelements (40) bis zur Schulter (48) konisch geformt ist und sich in Richtung der Schulter (48) verjüngt und der Kopf (12) einen konischen Einführabschnitt (22) aufweist.

2. Anordnung nach Anspruch 1, **dadurch gekennzeichnet, dass** das Pufferelement (40) im axialen Abstand zur Schulter (48) einen zweiten Führungsabschnitt (58) aufweist, der mit einem zylindrischen Abschnitt (16) des gewindelosen Schaftabschnitts zusammenwirkt.

3. Anordnung nach Anspruch 1 oder 2, **dadurch gekennzeichnet, dass** das Pufferelement (40) konzentrisch zur ersten Ausnehmung (40) eine zweite achsparallele Ausnehmung (56) aufweist, in welche die Feder (58) eingreift.

4. Anordnung nach einem der Ansprüche 1 bis 3, **dadurch gekennzeichnet, dass** das Pufferelement (40) durch mindestens einen achsparallelen Schlitz (60) geteilt ist, der sich mindestens bis zur Schulter (48) erstreckt.

5. Anordnung nach einem der Ansprüche 1 bis 4, **dadurch gekennzeichnet, dass** das Widerlager von einer Scheibe (24) gebildet ist, die zwischen dem Gewindeschaft und einem Bereich des gewindelosen Schaftes (16) angerollt ist.

6. Anordnung nach einem der Ansprüche 1 bis 4, **dadurch gekennzeichnet, dass** das Widerlager einteilig mit dem Schraubenschaft geformt ist.

## Claims

1. Buffer arrangement, in particular for movable parts in automobiles, with
- a screw (30) which has a shank (14) and a head (12), the shank having a threaded portion (32) and a thread-free portion (16) between the threaded portion (32) and the head (12),
- a buffer element (40) which has a recess (46) for receiving the head (12), the underside of the head (12) facing an annular shoulder (48) in the recess (46),
- a helical spring (58) between an abutment (24) on the shank and the buffer element (40), the said helical spring prestressing the buffer element (40) against the head (12),
- the head (12) having an annularly cylindrical circumferential portion (20) which cooperates with a cylindrical guide portion (54) of the recess (46), and
- the buffer element (40) consisting of two portions (42, 44) of different material, of which one portion consists of softer material and forms a stop face and the other portion (44) consists of harder material and forms the guide face (54),
**characterized in that**, to introduce the screw (30) into the buffer element (40), with the head (12) in front, the part (50) of the recess (46) of the buffer element (40) as far as the shoulder (48) is shaped conically and narrows in the direction of the shoulder (48), and the head (12) has a conical introduction portion (22).

2. Arrangement according to Claim 1, **characterized in that** the buffer element (40) has, at an axial distance from the shoulder (48), a second guide portion (58) which cooperates with a cylindrical portion (16) of the threadless shank portion.

3. Arrangement according to Claim 1 or 2, **characterized in that** the buffer element (40) has, concentrically to the first recess (40), a second axially parallel recess (56) in which the spring (58) engages.

4. Arrangement according to one of Claims 1 to 3, **characterized in that** the buffer element (40) is divided by at least one axially parallel slot (60) which extends at least as far as the shoulder (48).

5. Arrangement according to one of Claims 1 to 4, **characterized in that** the abutment is formed by a washer (24) which is rolled on between the threaded shank and a region of the threadless shank (16).

6. Arrangement according to one of Claims 1 to 4, **characterized in that** the abutment is shaped in one piece with the screw shank.

## Revendications

1. Dispositif d'amortissement, notamment pour des pièces mobiles dans des automobiles, avec
- une vis (30), qui comprend une tige (14) et une tête (12), dans laquelle la tige comprend une partie filetée (32) et une partie non filetée (16) entre la partie filetée (32) et la tête (12),
- un élément d'amortissement (40), qui comprend un évidement (46) pour recevoir la tête (12), dans lequel la face inférieure de la tête (12) est tournée vers un épaulement annulaire (48) dans l'évidement (46),
- un ressort hélicoïdal (58) entre un appui (24) sur la tige et l'élément d'amortissement (40), qui précontraint l'élément d'amortissement (40) contre la tête (12), dans lequel
- la tête (12) présente une partie périphérique cylindrique circulaire (20), qui coopère avec une partie de guidage circulaire (54) de l'évidement (46), et
- l'élément d'amortissement (40) se compose de deux parties (42, 44) en matières différentes, dont une partie se compose d'une matière plus souple et forme une face de butée et dont l'autre partie (44) se compose d'une matière plus dure et forme la face de guidage (54), **caractérisé en ce que**, pour l'introduction de la vis (30) dans l'élément d'amortissement (40) avec la tête (12) en avant, la partie (50) de l'évidement (46) de l'élément d'amortissement (40) est formée en cône jusqu'à l'épaulement (48) et se rétrécit en direction de l'épaulement (48) et la tête (12) présente une partie d'introduction conique (22).

2. Dispositif selon la revendication 1, **caractérisé en ce que** l'élément d'amortissement (40) présente, à distance axiale de l'épaulement (48), une deuxième partie de guidage (58), qui coopère avec une partie cylindrique (16) de la partie de tige non filetée.

3. Dispositif selon la revendication 1 ou 2, **caractérisé en ce que** l'élément d'amortissement (40) présente un deuxième évidement (56) parallèle à l'axe, concentrique au premier évidement (46), dans lequel le ressort (58) s'engage.

4. Dispositif selon l'une quelconque des revendications 1 à 3, **caractérisé en ce que** l'élément d'amortissement (40) est divisé par au moins une fente (60) parallèle à l'axe, qui s'étend au moins jusqu'à l'épaulement (48).

5. Dispositif selon l'une quelconque des revendications 1 à 4, **caractérisé en ce que** l'appui est formé par une rondelle (24), qui est tournée entre la tige filetée et une région de la tige non filetée (16).

6. Dispositif selon l'une quelconque des revendications 1 à 4, **caractérisé en ce que** l'appui est formé d'un seul tenant avec la tige de la vis.
